Europäisches Patentamt

European Patent Office

Office européen des brevets

(19)

(11) Numéro de publication: **0 087 361**

**A1**

(12) # DEMANDE DE BREVET EUROPEEN

(21) Numéro de dépôt: **83400323.8**

(22) Date de dépôt: **15.02.83**

(51) Int. Cl.³: **E 02 F 5/08**
**E 02 F 9/02**

(30) Priorité: **19.02.82 FR 8203179**

(43) Date de publication de la demande:
**31.08.83 Bulletin 83/35**

(84) Etats contractants désignés:
**AT BE CH DE FR GB IT LI LU NL SE**

(71) Demandeur: **HYDRO-ARMOR Sarl**
**Carrefour du Rohou B.P. 2**
**F-29252 Plouezoch(FR)**

(72) Inventeur: **Quere, Christian**
**Carrefour du Rohou**
**F-29252 Plouezoch(FR)**

(74) Mandataire: **Le Guen, Louis François**
**13, rue Emile Bara BP 91**
**F-35802 Dinard Cedex(FR)**

(54) **Machine à curer ou à creuser des fossés.**

(57) La machine comporte un dispositif excavateur à fraise rotative à axe de rotation transversal. Elle est portée, sur le côté, par un véhicule roulant n'enjambant pas le fossé et est associée à un tapis transporteur. La fraise (2 ou 41) tourne en sens contraire des roues du véhicule qui porte la machine.

Le tapis transporteur (15) est dirigé vers une zone située en avant du véhicule et les positions relatives de la fraise (2 ou 41) et du tapis transporteur (15) sont telles que la majorité des débris détachés par la fraise (2 ou 41) sont projetés sur le tapis transporteur (15). Derrière la fraise (2), est prévu un rouleau moteur (4) tournant dans le sens des roues du véhicule portant la machine. Le profil du rouleau moteur (4) est plus large que celui de la fraise (2). Une autre variante de machine est également décrite.

La machine est suspendue au bout d'une flèche transversale (16 ou 91) portée par le véhicule. La liaison entre la machine et la flèche est une articulation à axe longitudinal. Un vérin (32) monté entre la machine et la flèche détermine l'angle de roulis de la machine. Celle-ci porte un appareil de mesure de sa verticalité (76, 77, 78) qui commande une vanne 82 alimentant le vérin (32), de manière à assurer la verticalité de la machine. La cabine (98) du véhicule associé, est déplaçable transversalement en fonction de la position de la flèche (91) portant la machine.

./...

FIG.1

Machine à creuser ou à curer des fossés

La présente invention concerne une machine à creuser ou curer des fossés d'écoulement des eaux et d'assainissement qui sont prévus le long des routes ou dans les champs. Elle concerne plus particulièrement .une machine pourvue d'un dispositif excavateur à fraise rotative. La machine est portée par un tracteur, ou plus généralement un engin automoteur, au moyen d'un dispositif à flèche transversale qui permet de travailler les fossés situés latéralement par rapport à la trajectoire du tracteur.

On connaît déjà des machines de ce type qui sont décrites dans le certificat d'utilité FR 2 269 610 et le brevet FR 2 420 607. Dans ces machines, la fraise, dont l'axe de rotation est perpendiculaire à la direction de déplacement de la fraise, est portée au bout d'un étrier qui peut pivoter librement autour d'un axe, parallèle à l'axe de rotation et solidaire du châssis de la fraise. Le châssis de la fraise comporte deux tôles latérales qui épousent le profil radial de la fraise qui est trapézoïdal.

Par ailleurs, dans ces machines, la fraise tourne dans le sens des roues du tracteur, si bien que la terre, la boue, etc., détachées du fond du fossé par la fraise doivent être reprises immédiatement par un ensemble de tapis transporteurs qui les dirige vers une remorque ou un autre véhicule tractés par le tracteur. Cette disposition présente un certain nombre d'inconvénients.

En effet, notamment, sur une autoroute, les véhicules récepteurs, qui sont des camions à bennes doivent être orientés à contre-sens par rapport au tracteur pour éviter que la sauterelle de convoyage de la terre ne soit trop longue. Pour aller décharger ou pour revenir se charger, les camions doivent circuler à contre-sens, ce qui oblige à fermer une voie complète de circulation, au moins entre deux points d'accès à l'autoroute et sur les bretelles d'accès. Il en résulte de grosses perturbations dans le trafic qu'il y a tout intérêt à éviter, notamment pour des raisons de sécurité.

Par ailleurs, dans cette configuration, l'opérateur de la machine, c'est à dire le chauffeur du tracteur, doit, à la fois, surveiller la fraise dans le fossé, l'orientation de la sauterelle vers l'arrière et diriger son engin. L'exécution simultanée de ces tâches s'est, à l'expérience, révélée pratiquement impossible pour un seul homme.

Par ailleurs, dans le brevet FR 527 621, il est décrit une machine à creuser les fossés à fraise à axe de rotation transversal tournant en sens contraire des roues de déplacement horizontal de la machine. La machine décrite dans le brevet FR 527 621 peut convenir pour creuser le sillon d'un fossé, mais ne convient pas pour assurer le curage de manière satisfaisante. En effet, elle ne comporte, devant la fraise, qu'un ou plusieurs écrans destinés uniquement à diriger latéralement la pluie de terre et de glaise. Il en résulte qu'elle crée des tas de terre d'un côté ou des deux côtés du fossé. Ces tas ne peuvent être laissés sur place car la première pluie en ramène une grande partie au fond du fossé. Il faut donc prévoir, en plus, une machine à enlever le tas. Cette seconde opération est coûteuse, elle est parfois difficile ou impossible si le tas est d'un côté du fossé et la machine destinée à l'enlever de l'autre.

Par ailleurs, dans le brevet FR 527 621, il est précisé que la roue porteuse doit être de largeur moindre que celle du fossé creusé par la machine. Il en résulte qu'après le passage de la machine à creuser, les flancs du fossé peuvent s'effriter.

Un objet de l'invention consiste à prévoir une machine à creuser et à curer les fossés, qui ne présente pas les inconvénients mentionnés ci-dessus et qui assure un véritable curage du fossé creusé ou curé.

L'objet ci-dessus, ainsi que d'autres objets de l'invention, sont atteints par la mise en oeuvre des combinaisons de moyens définies dans les revendications complétant la présente invention.

Les caractéristiques de l'invention apparaîtront plus clairement à la lecture de la description d'exemples de réalisation, ladite description étant faite en relation avec les dessins joints, parmi lesquels:

la Fig. 1 est une vue schématique de profil d'un premier exemple de réalisation d'une machine suivant l'invention,

la Fig. 2 est une vue schématique de profil d'un second exemple de réalisation d'une machine suivant l'invention,

la Fig. 3 est une vue schématique de l'arrière de la machine de la Fig. 2, ainsi que d'un flèche articulée reliant la machine au tracteur,

la Fig. 4 est un schéma hydraulique d'un dispositif de maintien de position verticale utilisable aussi bien avec la machine de la Fig. 1 qu'avec celle de la Fig. 2, et

la Fig. 5 est une vue schématique d'une variante d'ancrage de la flèche articulée de la Fig. 3.

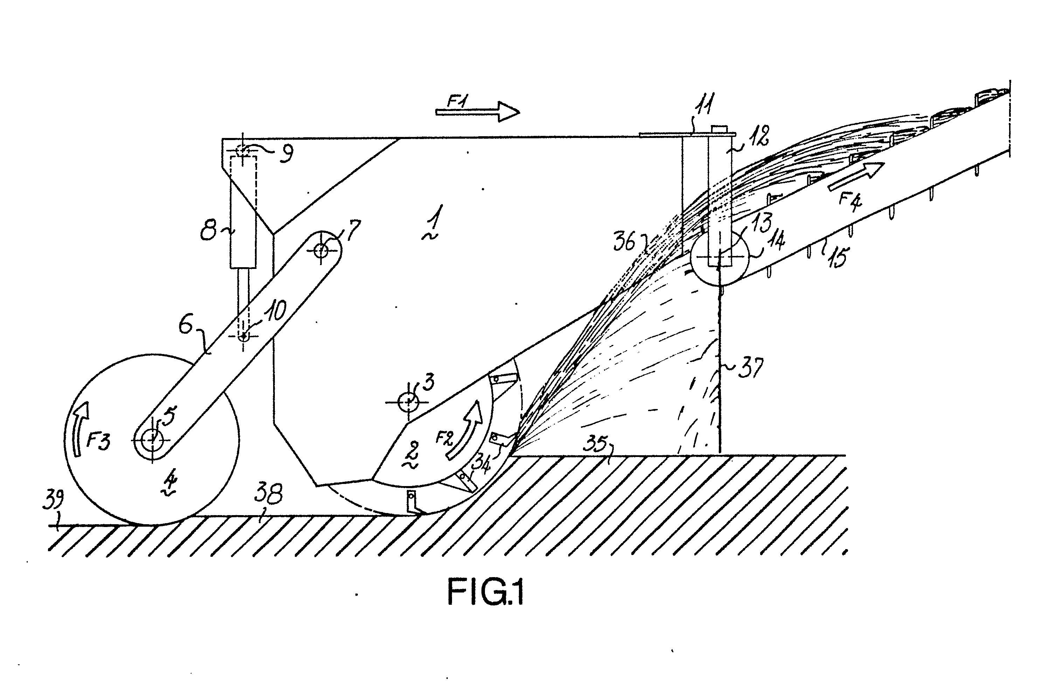

La machine de la Fig. 1 comporte un châssis 1, une fraise 2 tournant autour d'un axe 3, solidaire du châssis 1, un rouleau de propulsion 4 tournant autour d'un axe 5, parallèle à l'axe 3 et porté au bout d'un bras 6 oscillant autour d'un axe 7, parallèle aux axes 3 et 5 et solidaire du châssis 1. La position angulaire du bras 6 par rapport au châssis 1 est déterminée par un vérin 8 dont l'extrémité du corps est articulée sur un axe 9 porté par le châssis 1 et l'extrémité de la tige est articulée sur un axe 10 porté par le bras 6.

A l'avant du châssis 1, est porté par une potence 11 un pivot vertical 12 qui porte à son extrémité inférieure un axe horizontal 13 autour duquel tourne le rouleau de guidage 14 du bas d'un tapis transporteur 15.

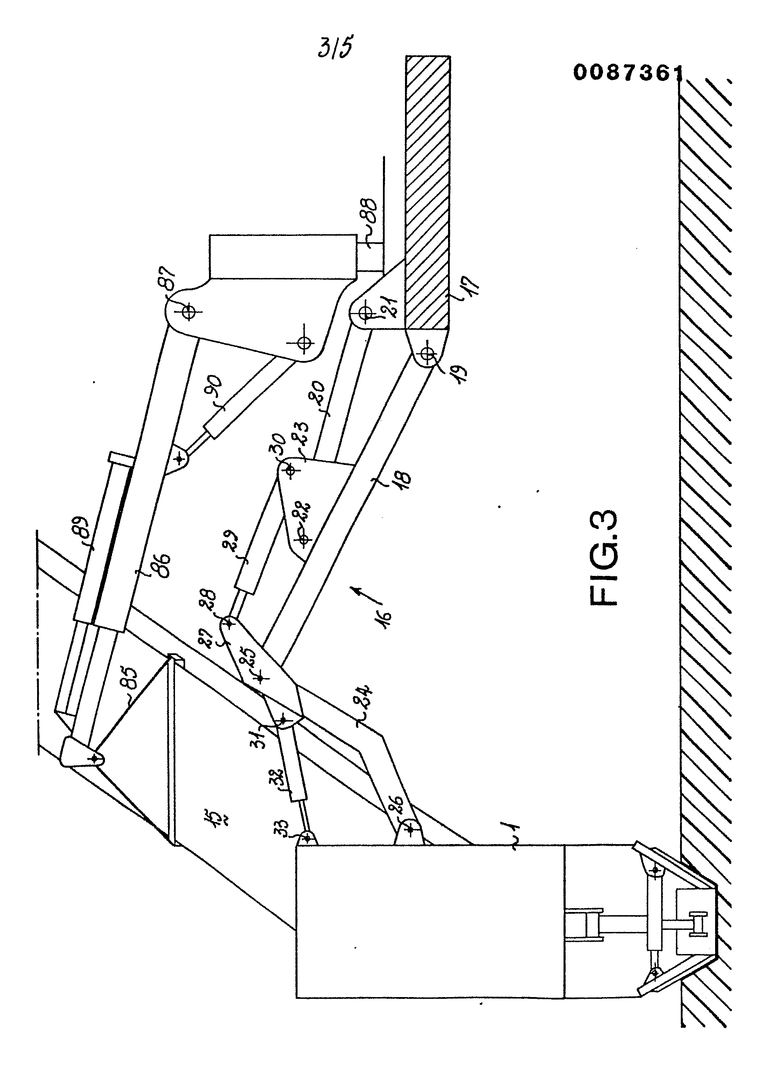

La machine de la Fig. 1 est, de préférence portée par une flèche transversale articulée 16, telle que celle de la Fig. 3. La flèche 16 est elle-même portée par le châssis d'un tracteur 17, ainsi représenté symboliquement. Elle comprend un bras 18 articulé autour d'un axe longitudinal 19 porté par le tracteur 17, la position angulaire du bras 18 par rapport au tracteur 17 est déterminée par un vérin 20 dont l'extrémité du corps est articulée autour d'un axe longitudinal 21, solidaire du tracteur 17, et dont l'extrémité de la tige est articulée sur un axe 22 solidaire du bras 18, de préférence, par l'intermédiaire d'une plaque verticale 23 montée sur le bras 18. La flèche comprend un second bras 24 pivotant autour d'un axe longitudinal 25 solidaire de l'extrémité libre du bras 18. A l'extrémité libre du bras 24, est suspendu par un étrier à axe longitudinal 26 le châssis 1. Le bras 24 est prolongé au-delà de l'axe 25 pour former un bras de levier 27 qui est articulé sur un axe longitudinal 28 solidaire de l'extrémité d'un vérin 29 dont l'extrémité du corps est articulée sur un axe longitudinal 30 solidaire de la plaque 23. Sur un axe 31, situé à proximité de l'axe 25 sur le bras 24, est articulée l'extrémité du corps d'un vérin 32 dont l'extrémité de la tige est articulée sur un axe 33 solidaire du châssis 1. Le vérin 32 est de préférence un vérin à double effet.

Le triangle formé par les trois points 19, 25 et 26, peut être déformé en agissant sur les vérins 20 et 29, qui permettent ainsi de régler la distance du point 26 au point 19 et leurs hauteurs relatives. L'orientation du châssis 1 de la machine par rapport à un plan vertical longitudinal est déterminée par le vérin 32.

Comme le montre la Fig. 1, le tracteur 17 entraîne le châssis 1 dans le sens de la flèche F1, la fraise 2 tourne dans le sens de la flèche F2, c'est à dire en s'opposant à la translation du châssis 1, et le rouleau 4 tourne dans le sens de la flèche F3, contraire à celui de la fraise 2 et aidant la translation du châssis 1.

Dans ces conditions, la fraise 2, tournant par exemple à une vitesse de 200 tours/minute et le châssis étant translaté à une vitesse linéaire de 1 km/heure, projette, par sa denture 34, les débris arrachés au fond 35 du fossé qui forment un jet 36 qui aboutit sur le bas du tapis transporteur 15 qui tourne dans le sens de la flèche F4. Le jet 36 est naturellement très peu divergent par rapport au plan vertical longitudinal de déplacement de la machine. Dans le plan vertical, le jet représente de l'ordre de 80 % des projections, le reste formé, d'une manière générale, par des parties plus lourdes étant projeté au-dessous de 36.

Sous le pivot 12, est suspendu un rideau 37 qui a pour effet d'arrêter les projections ne faisant pas partie du jet 36 et dont la dispersion horizontale peut être plus grande que celle du jet. Le rideau 37 est une feuille souple ou un ensemble de lamelles verticales sur lequel les solides projetés ne rebondissent pas. Ainsi, les débris ne tombant pas sur le tapis 15, retombent au pied du rideau 37 pratiquement devant la fraise 2. Comme ces débris sont déjà détachés, quand ils sont repris par la fraise 2, ils ont une forte probabilité de faire partie du jet 36.

La fraise 2 a évidemment un profil trapézoïdal correspondant à celui du fossé à curer. Le rouleau 4 a également un profil trapézoïdal, lequel est, de préférence, choisi plus large que celui de la fraise 2 pour assurer un tassage des versants du fossé. C'est ce que fait apparaître la différence de niveaux entre le fond 38, après passage de la fraise 2, et le fond 39, plus bas, après passage du rouleau 4. Le décalage de niveau est réglable par le vérin 8.

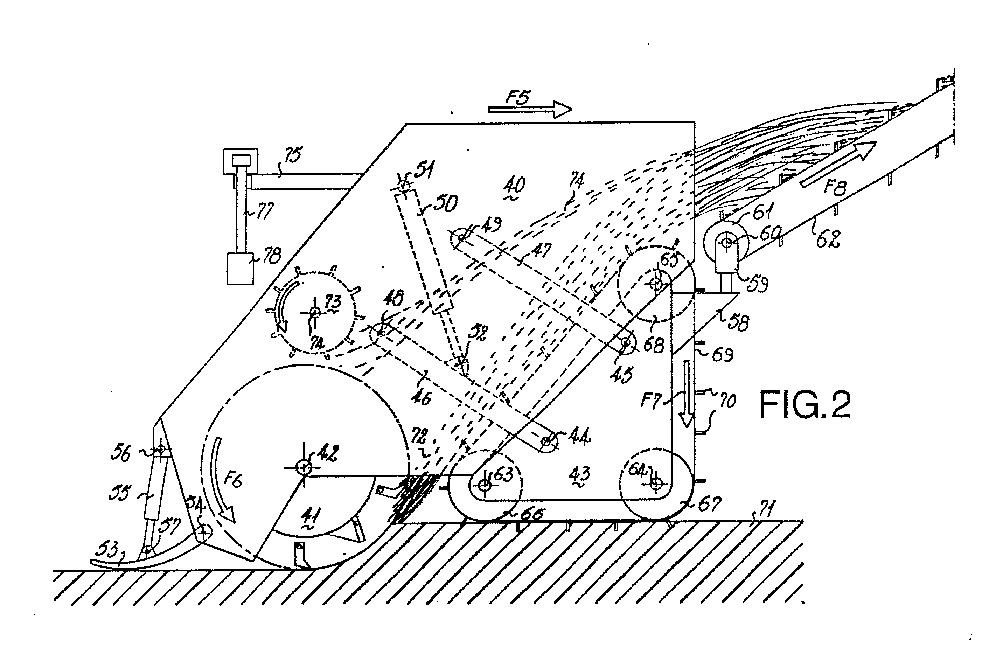

Dans la variante de la Fig. 2, la machine comporte un châssis 40, une fraise 41 tournant autour d'un axe 42, solidaire du châssis 40, un dispositif de propulsion 43 articulé sur des axes 44 et 45 porté par les extrémités de deux bras oscillants parallèles 46 et 47, eux-mêmes ayant leurs autres extrémités articulées sur des axes 48 et 49 solidaires du châssis 40. Les axes 44, 45, 48 et 49 sont les sommets d'un parallélogramme déformable dont les bras 46 et 47 sont deux côtés parallèles. La position angulaire des bras 46 et 47 par rapport au châssis 40 est déterminée par un vérin 50 dont l'extrémité du corps est articulée sur un axe 51 porté par le châssis 40 et dont l'extrémité de la tige est articulée sur un axe 52 porté par le bras 46. A l'arrière du châssis 40, est prévu un patin de lissage 53 articulé autour d'un axe 54 solidaire du châssis 40 et dont la position angulaire est réglée par un vérin 55 dont l'extrémité du corps est articulée sur un axe 56 solidaire du châssis 40 et dont l'extrémité de la tige est articulée sur un axe 57 solidaire du patin 53.

A l'avant du dispositif de propulsion 43, est porté, par une potence 58, un pivot vertical 59 qui porte, à son extrémité supérieure, un axe horizontal 60 autour duquel tourne le rouleau de guidage 61 du bas d'un tapis transporteur 62.

Le dispositif de propulsion 43 est constitué de deux plaques triangulaires parallèles, éventuellement rendues solidaires l'une de l'autre par des entretoises, non montrées, qui portent, à leurs trois sommets des axes horizontaux 63, 64 et 65, sur lesquels sont montés des rouleaux de guidage 66 et 67 et un rouleau moteur 68 coopérant avec une bande sans fin 69 munie de nervures 70. La bande sans fin 69 joue ainsi le rôle d'une chenille dont le parcours forme un triangle comportant notamment une partie horizontale entre les rouleaux 66 et 68 où les nervures 70 mordent dans le fond 71 du fossé à curer, assurant une force de traction importante.

Il faut bien comprendre que le dispositif de propulsion 43 pourrait aussi être constitué par un simple tambour circulaire à nervures. Toutefois, avec une géométrie circulaire, une ou deux nervures seulement sont à la fois en contact avec le fond du fossé. Comme la croûte déposée au fond du fossé est, en général, relativement meuble, sinon humide, sous forme de boue, l'effort développé par une ou deux nervures peut être inefficace pour équilibrer la force de recul engendrée par la fraise. Par contre, le choix d'un système du type chenille permet d'atteindre une efficacité suffisante.

En pratique, la bande sans fin 69 peut avoir une section transversale en trois segments dont celui du milieu est horizontal et les deux autres relevés de manière que, non seulement, la surface centrale soit active, mais encore que les parties relevées s'appuient sur le bas des bords relevés du fossé.

La machine de la Fig. 2 est, de préférence, également portée par une flèche transversale articulée, telle que la flèche 16 de la Fig. 3. Dans ce cas, comme le montre la Fig. 3, le tracteur entraîne le châssis 40 dans le sens de la flèche F5, la fraise 41 tourne dans le sens de la flèche F6 et le dispositif 43 tourne dans le sens de la flèche F7.

Dans ces conditions, la fraise 41, tournant à la même vitesse que la fraise 2, Fig. 1, projette, par sa denture, les débris arrachés au fond du fossé qui forment un jet 72, semblable à 3ε et qui aboutit sur le bas du tapis transporteur 62 tournant dans le sens de la flèche F8. Le dispositif de propulsion 43 est disposé suffisamment devant la fraise 41 de manière que la majorité du jet 72 passe par dessus la partie oblique montante de la bande sans fin 69.

7

0087361

Les débris qui sont projetés sous le jet, proprement dit, sont repris par les nervures 70 de la bande 69 et sont déversés devant le dispositif 43. On obtient donc un résultat équivalent à celui qui était obtenu avec le rideau 37 de la Fig. 1.

Dans la machine de la Fig. 2, on a encore représenté une roue à nervures 73 située au-dessus de la fraise 41 et qui tourne autour d'un axe 74, solidaire du châssis 40. La roue 73 est presque tangente à la fraise 41. Elle tourne dans le même sens que celle-ci, ce qui lui permet de détacher des mottes qui pourraient rester accrochées à la denture de la fraise, de les émietter et d'en projeter les morceaux, suivant un jet 74 aboutissant sur le tapis 62.

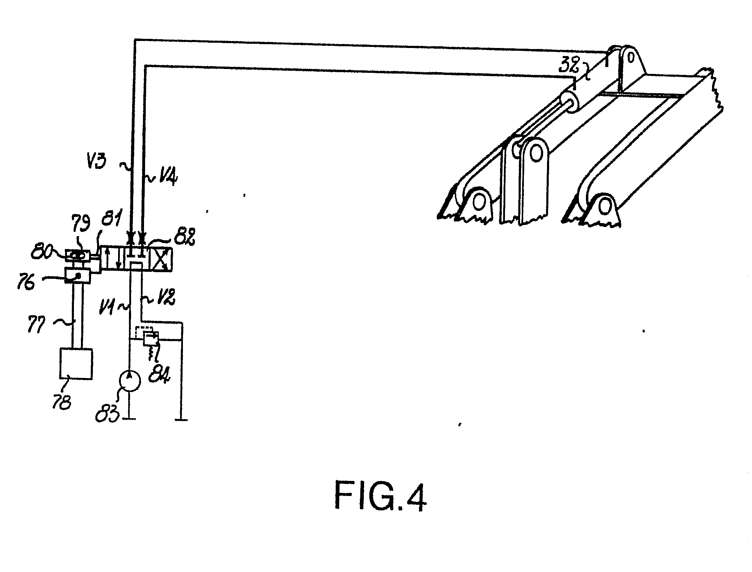

A l'arrière du châssis 40, est encore prévue une potence 75 qui porte un axe horizontal longitudinal 76, Fig. 4, sur lequel pivote librement un bras 77 lesté, dans sa partie basse, par une masse 78. Le bras 77 prend naturellement une direction verticale. Il est prolongé vers le haut sur une courte distance et porte à son extrémité supérieure une tige horizontale 79 qui passe dans une lumière 80 de l'extrémité d'un piston de commande 81 d'une vanne de commutation hydraulique 82 à quatre voies.

La voie V1 de la vanne 82 est reliée à la sortie d'une pompe hydraulique 83 tandis que la voie V2 est reliée au retour de fluide dans la réserve de fluide dans laquelle la pompe 83 puise. Les voies V3 et V4 sont respectivement reliées aux deux connexions hydrauliques du vérin à double effet 32, déjà mentionné en relation avec la Fig. 3. En regardant le dessin de la Fig. 4, la vanne 82 peut prendre trois positions, la première au centre où la voie V1 est reliée à la voie V2 et où les voies V3 et V4 sont isolées, la seconde à gauche où la voie V1 est reliée à la voie V3 et où la voie V4 est reliée à la voie V2, et la troisième à droite où la voie V1 est reliée à la voie V4 et où la voie V3 est reliée à la voie V2.

Le corps de la vanne 82 est solidaire du châssis de la machine. Quand la machine est strictement verticale, c'est à dire que l'axe de rotation de la fraise est horizontal, la tige 79 est désaccouplée du piston 81, qui, soumis à une force de rappel, prend la position centrale dans laquelle le vérin 32 n'est pas alimenté, donc n'intervient pas sur l'inclinaison de la machine. Quand celle-ci subit un mouvement de roulis dans un sens, la tige horizontale 79 vient en

8 0087361

contact avec une extrémité de la lumière 80 et déplace le piston 81 hors de sa position centrale si bien que le vérin 32 se trouve alimenté dans un sens tel que la machine est remise en position verticale. Si la machine subit un mouvement de roulis dans l'autre sens, le piston 81 est déplacé par la tige 79 dans l'autre sens et le vérin se trouve alimenté dans l'autre sens. On notera que la longueur de la lumière 80 détermine la zone de position neutre qui évite de faire intervenir le vérin 32 pour des décalages minimes.

Ce système permet ainsi avec des moyens simples d'assurer l'horizontalité de l'axe de la fraise, afin d'obtenir un profil de fossé satisfaisant. A noter qu'une soupape de sécurité tarée 84 peut être montée entre V1 et V2 pour éviter des surpressions dans le cas où l'action du vérin 32 se heurterait à une résistance trop importante.

La Fig. 3 montre encore que le tapis 15 est supporté, non seulement par le pivot 59, mais aussi par un système du type palonnier 85 suspendu au bout d'une potence téléscopique 86 pivotant librement autour d'un axe horizontal 87, lequel est monté sur une chape pivotant librement autour d'un axe vertical 88 monté sur le tracteur 17. Le réglage en longueur de la potence 86 peut être effectué au moyen d'un vérin 89 et sa position angulaire verticale par un vérin 90. Le réglage en longueur permet notamment de régler le point de chute des débris à l'avant.

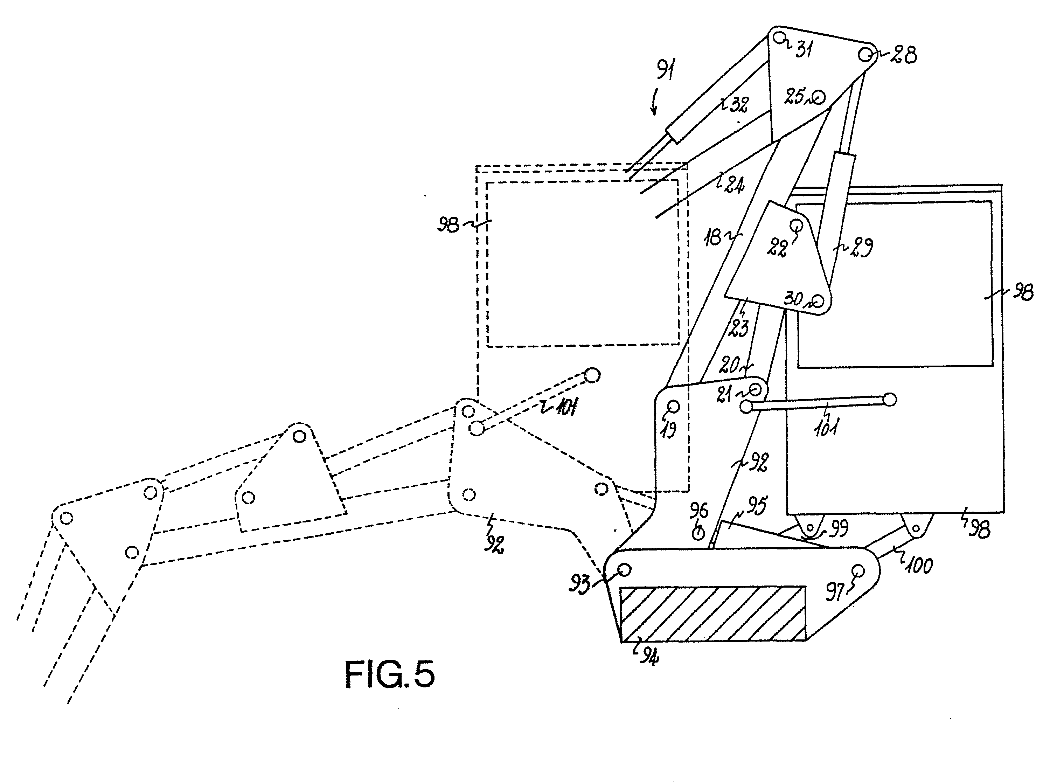

La flèche transversale articulée 16 de la Fig. 3 est articulée aux points fixes 19 et 21 sur le châssis du tracteur. A la Fig. 5, on a montré une variante 91 de cette flèche qui est toujours articulée autour de deux points 19 et 21, mais dans cette variante les axes 19 et 21 sont portés par une plaque 92 qui peut tourner autour d'un axe 93 directement porté par le châssis 94 du tracteur. La position angulaire de la plaque 92 est réglable par un vérin 95 dont l'extrémité de la tige est articulée sur un axe 96 porté par 92 et dont l'extrémité du corps est articulée sur un axe 97, fixe par rapport au chassis 94.

En pratique, quand le vérin 20 est bloqué, l'ensemble du bras 18 et de la plaque 92 forme un bloc qui fonctionne comme le bras 18 de la Fig. 3. L'intérêt de la plaque 92 est de permettre de faire varierla distance entre le point mobile 25 et le point fixe 93. Cette variation, notamment la réduction de cette distance, permet de faire

travailler la fraise beaucoup plus près du tracteur que quand l'ensemble 18-92 est rigide.

Par ailleurs, la cabine de pilotage 98 du tracteur est montée sur deux biellettes 99 et 100 d'égales longueurs dont les autres extrémités sont articulés sur le chassis 94, les axes des articulations étant longitudinaux. De plus, la cabine 98 est reliée à la plaque 92 par une biellette 101. Il en résulte que la cabine 98 se trouve à gauche du châssis quand la plaque 92 est relevée en position route, indiquée en traits pleins à la Fig. 5, tandis qu'elle est déportée du coté droit quand la flèche est dépliée en position de travail, indiquée en traits tirets à la Fig. 5. Ainsi, en position route, le chauffeur se trouve dans la position normale d'un chauffeur de véhicule classique, tandis qu'en position de travail, il est plus près de la fraise et peut mieux en surveiller le travail. Bien entendu, cette possibilité de déplacementde la machine implique pratiquement que les roues orientables du tracteur soient commandées par des moyens autres que mécaniques et, de préférence, par des moyens hydrauliques pour que le tracteur puisse changer de direction.

Il va sans dire que les notions de droite et de gauche mentionnées ci-dessus sont valables pour des pays à conduite à droite et, que dans les pays à conduite à gauche, il faudrait inverser ces notions.

REVENDICATIONS

1) Machine à creuser ou curer les fossés à dispositif excavateur à fraise rotative à axe de rotation transversal portée, sur le côté, par un véhicule roulant n'enjambant pas le fossé, associée à un tapis transporteur, dans laquelle la fraise (2 ou 41) tourne en sens contraire des roues du véhicule qui porte la machine, caractérisée en ce que le tapis transporteur (15) dirigé vers une zone située en avant du véhicule, les positions relatives de la fraise (2 ou 41) et du tapis transporteur (15) étant telles que la majorité des débris détachés par la fraise (2 ou 41) sont projetés sur le tapis transporteur (15).

2) Machine suivant la revendication 1, dans laquelle, derrière la fraise (2), est prévu un rouleau moteur (4) tournant dans le sens des roues du véhicule portant la machine, caractérisée en ce que le profil du rouleau moteur (4) est plus large que celui de la fraise (2).

3) Machine suivant la revendication 2, caractérisée en ce que le point bas du rouleau moteur (4) est plus bas que celui de la fraise (2).

4) Machine suivant la revendication 3, caractérisée en ce que le rouleau moteur (4) est monté au bout d'un bras oscillant (6) autour d'un axe transversal (7), solidaire du châssis (1) de la fraise (2), un vérin (8) monté entre le châssis (1) et le bras oscillant (6) permettant le réglage angulaire dudit bras et donc de faire varier la différence de niveau des points bas du rouleau moteur (4) et de la fraise (2).

5) Machine suivant l'une des revendications 2 à 4, caractérisée en ce que, devant la fraise (2), sous l'extrémité adjacente du tapis transporteur (15), est pendu un rideau transversal (37).

6) Machine suivant la revendication 1, caractérisée en ce qu'elle comporte, devant la fraise (41), un dispositif de propulsion (43) formé par une bande sans fin (69) à parcours polygonal dont un côté est horizontal, un côté est oblique en montant vers l'avant à partir d'un point situé immédiatement en avant de la fraise (41), la bande (69) tournant dans le même sens que les roues du véhicule portant la machine.

0087361

7) Machine suivant la revendication 6, caractérisée en ce que la bande (69) porte de place en place des nervures transversales (70) en saillie vers l'extérieur.

8) Machine suivant la revendication 6 ou 7, caractérisée en ce que le profil transversal de la bande (69) comporte un segment horizontal entre deux segments légèrement inclinés vers le haut.

9) Machine suivant l'une des revendications 6 à 8, caractérisée en ce que la bande (69) est constituée par une chenille.

10) Machine suivant l'une des revendications 1 à 9, caractérisée en ce qu'elle est suspendue au bout d'une flèche transversale (16 ou 91) portée par un véhicule, la liaison entre la machine et la flèche étant une articulation à axe longitudinal, un vérin (32) monté entre la machine et la flèche déterminant l'angle de roulis de la machine, laquelle porte un appareil de mesure de sa verticalité (76, 77, 78) qui commande une vanne 82 alimentant ledit vérin (32), de manière à assurer la verticalité de la machine.

11) Machine suivant l'une des revendications 1 à 10, caractérisée en ce que la cabine (98) du véhicule associé, est déplaçable transversalement en fonction de la position de la flèche (91) portant la machine.

**FIG.1**

0087361

FIG.2

F5

F8

F7

F6

FIG.3

V3

V4

79 81

80

82

76

V1 V2

77

84

78

83

FIG.4

38

0

FIG.5

0087361

Office européen
des brevets

**RAPPORT DE RECHERCHE EUROPEENNE**

0087361

Numéro de la demande

EP    83 40 0323

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y,D | FR-A-2 420 607   (MEUNIER) *Page 3, ligne 20 - page 10, ligne 15* | 1,10 | E 02 F    5/08 E 02 F    9/02 |
| | --- | | |
| Y | FR-A-1 063 277   (KOLBE) *En entier* | 1 | |
| | --- | | |
| A | US-A-2 679 703   (BOREL) *En entier* | 2,3 | |
| | --- | | |
| A | US-A-1 846 902   (POWELL) *Page 3, lignes 81-98* | 2,3 | |
| | --- | | |
| A | DE-C-  509 324   (WIGGERS) *En entier* | 2,3 | DOMAINES TECHNIQUES RECHERCHES (Int. Cl. ³) |
| | --- | | |
| A | US-A-3 690 023   (PETERSON) *Figure 3* | 4 | E 02 F A 01 B |
| | --- | | |
| A | US-A-3 787 099   (TUCKER) *Figure 1,2* | 6,7,9 | B 62 D |
| | --- | | |
| A | GB-A-2 077 203   (HEAD) *Figures 1,2,4,5* | 8 | |
| | --- | | |
| A | DE-A-1 634 911   (ORENSTEIN) *Pages 3,4* | 10 | |
| | ---                    -/- | | |

Le present rapport de recherche a été établi pour toutes les revendications

| Lieu de la recherche LA HAYE | Date d'achèvement de la recherche 26-04-1983 | Examinateur PAUCNIK B. |
|---|---|---|

**RAPPORT DE RECHERCHE EUROPEENNE**

Office européen
des brevets

| Catégorie | Citation du document avec indication. en cas de besoin, des parties pertinentes | Revendication concernée | CLASSEMENT DE LA DEMANDE (Int. Cl. ³) |
|---|---|---|---|
| **DOCUMENTS CONSIDERES COMME PERTINENTS** | | | Page  2 |
| A | FR-A-1 545 145  (ALEXANDER STEPHEN) *En entier* | 11 | |
| A,D | FR-A-  527 621  (LÖKEN) | | |

DOMAINES TECHNIQUES RECHERCHES (Int. Cl. ³)

Le présent rapport de recherche a été établi pour toutes les revendications

| Lieu de la recherche | Date d'achèvement de la recherche | Examinateur |
|---|---|---|
| LA HAYE | 26-04-1983 | PAUCNIK B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille. document correspondant